# EUROPÄISCHE PATENTSCHRIFT

(11) **EP 2 201 750 B1**
(45) Veröffentlichungstag und Bekanntmachung des Hinweises auf die Patenterteilung: **16.11.2011**
(21) Anmeldenummer: 08799923.1
(22) Anmeldetag: 16.09.2008
(51) Int. Cl.: H04N 1/04, B42D 9/04

(54) **VORRICHTUNG ZUM ERFASSEN DES INHALTS EINES BUCHES**
APPARATUS FOR DETECTING THE CONTENT OF A BOOK
DISPOSITIF D'ENREGISTREMENT DU CONTENU D'UN LIVRE

(30) Priorität: 17.09.2007 AT 14512007
(43) Veröffentlichungstag der Anmeldung: 30.06.2010
(73) Patentinhaber: Quidenus Gmbh, 1190 Wien (AT)
(72) Erfinder: JAKES, Alfred, A-1180 Wien (AT); BÖSCH, Vitus, 1090 Wien (AT); QUIDENUS, Sofie, 1190 Wien (AT)
(74) Vertreter: Patentanwaltskanzlei Matschnig & Forsthuber OG
(86) Internationale Anmeldenummer: PCT/AT2008/000334
(87) Internationale Veröffentlichungsnummer: WO 2009/036482

(56) Entgegenhaltungen:
- EP-A- 0 174 731
- WO-A-2006/026800
- WO-A-2006/105568
- US-A- 4 691 909
- ANONYMOUS: "BancTec APT BookScan 1200/2400"[Online] 2006, XP002505058 Langen, Deutschland Gefunden im Internet: URL:http://www.kirtas.com/pdfs/German_1200 _2400_Datasheet.pdf> [gefunden am 2008-11-21]

## Beschreibung

Die Erfindung betrifft eine Vorrichtung zum Erfassen des Inhalts eines Buches oder buchartig gebundener Blätter, zumindest bestehend aus: einer Wiege mit zwei nebeneinander in einem stumpfen Winkel zueinander angeordneten Auflageflächen, in welche ein Buch in geöffnetem Zustand einlegbar ist, wobei das Buch mit den aufgeschlagenen Seiten nach oben liegt; einem Kamerasystem mit zumindest zwei Kameraeinheiten, die jeweils oberhalb der Wiege zum Aufnehmen einer der aufgeschlagenen Seiten eines in der Wiege gehaltenen Buches positioniert sind; sowie einer Umblättervorrichtung zum Umblättern der Seiten eines in der Wiege gehaltenen Buches; wobei die Wiege und/oder die Auflageflächen relativ zu dem Kamerasystem in im Wesentlichen vertikaler Position bewegbar ist/sind.

Vorrichtungen zum Erfassen von Büchern, insbesondere mittels einer Kamera zum nachfolgenden Digitalisieren, sind wohlbekannt.

WO 2005/088957 A1 stellt ein Verfahren und eine Vorrichtung zum Abbilden eines zweidimensionalen Gegenstands, z.B. eines Buches, vor, insbesondere zum digitalen Erfassen des Buches. Eine Wiege, in die das Buch eingelegt werden kann, ist in einem spitzen Winkel geöffnet. Zwei Kameras sind symmetrisch oberhalb des Buchs angeordnet. Bei dem Aufnehmen der Bilder wird eine keilartig gestaltete Einheit aus zwei Glasplatten auf das Buch zum Glätten der Seiten gedrückt; diese Einheit wird zum Umblättern angehoben.

In WO 2006/105568 A1 ist zusätzlich beschrieben, dass eine keilförmige Aufnahmeeinheit auf das Buch bzw. von diesem weg und die Wiege als winkelförmige Auflagevorrichtung, auf der das Buch liegt, senkrecht dazu bewegt werden kann. Die Aufnahmeeinheit sorgt auch für das Umblättern und ist hierzu mit einem Luft-Saugsystem ausgestattet. Das Luft-Saugsystem hat jedoch den Nachteil, dass die Oberfläche des Blattes an der Glasplatte entlang schleift und somit einem wenig schonenden Vorgang unterworfen wird.

In beiden genannten Druckschriften werden die Probleme, die mit den sich verändernden dynamischen Verhältnissen beim Umblättervorgang auftreten können, ignoriert.

Bücher haben verschiedenste Bindungsarten, bestehen aus den verschiedenste Papiersorten (oder papierähnlichen Materialien) und weisen daher die verschiedensten Eigenschaften auf. Eine der wesentlichen Eigenschaften des Buches, die für ein automatisiertes Umblättern wichtig sind, ist die Klammerwirkung des Buches. Die Klammerwirkung geht auf die gespeicherte elastische Energie des Buches im Bereiche der Buchbindung zurück. Diese Energie hängt von verschiedensten Faktoren ab und bewirkt ein Zuklappen von einzelnen Seiten oder auch des gesamten Buches.

Die Klammerwirkung des Buches bestimmt wie weit ein Buch geöffnet werden kann und darf. Es gibt Bindearten, die ein Öffnen des Buches auf 180° ohne weiteres ermöglicht. Viele Bücher, z.B. Lehrbücher, sind so gebunden worden, um auf einer geraden Oberfläche "bequem" liegen zu bleiben, ohne dass die Blätter zusammen klappen. Im Allgemeinen hat jedes Buch seinen eigenen "ergonomischen" Öffnungswinkel,

Der optimale Öffnungswinkel des Buches hat aber auch sehr viel damit zu tun, wie weit der Inhalt (gedruckter oder geschriebener Teil) sichtbar gemacht wird. In vielen Fällen wurde über die Mitte des Buches gedruckt oder geschrieben. Um diesen Bereich leserlich zu machen, sollte das Buch ganz (180°) geöffnet werden; das ist allerdings oft nicht möglich, weil aus Gründen der Buchbindung, der Alterung des Buches ein Öffnen auf 180° nicht erfolgen kann, ohne dass der Buchrücken dadurch beschädigt werden könnte.

Eine Vorrichtung zum Anheben eines Blattes, um dieses umzublättern, ist in WO 2006/026800 A2 vorgestellt. Der Umblättervorgang wird mithilfe eines Anhebeelements eingeleitet, das um eine in einem spitzen Winkel auf die Ebene der Auflagefläche stehende Drehachse schwenkbar ist, und dessen Spitze mit einer Ecke des Blatts in Kontakt tritt. Durch eine Rotation des Anhebelements wird das Blatt angehoben.

Ein Gerät zum Umblättern der Seiten eines Buches ist in US 4,691,909 gezeigt, in dem das Buch auf einer Halterung mit zwei Hälften liegt, die eine V-artige Auflagefläche bilden.

EP 0 174 731 offenbart einen Buchhalter mit einem Paar Trägerplatten, die zueinander in einer V-Anordnung orientiert sind und relativ zueinander bzw. auseinander bewegt werden können.

Es ist eine Aufgabe der vorliegenden Erfindung, die bekannten Vorrichtungen zum Erfassen von Büchern und ähnlichen Werken zu verbessern, wobei insbesondere eine schonende Handhabung des aufzunehmenden Buches bzw. Blattbildes wichtig ist.

Zum Halten eines (dicken) Buches schlägt WO 2004/025410 A2 eine Wiegenanordnung vor, die zwei getrennte Wiegenhälften aufweist, wobei die beiden Flügel der Wiege senkrecht zur Ebene der Flügel bewegbar sind.

Die genannte Aufgabe wird ausgehend von einer Vorrichtung der eingangs genannten Art dadurch gelöst, dass erfindungsgemäß die Auflageflächen hinsichtlich ihrer relativen Position zueinander einstellbar sind, nämlich zumindest in einer Richtung, die jeweils parallel zur Ebene der Auflagefläche und senkrecht zur Bifurkation ist; zudem ist jeder Auflagefläche ein Verbindungsstück zugeordnet, mittels dessen die jeweilige Auflagefläche hinsichtlich ihres Winkels einstellbar ist.

Hierbei wird unter Bifurkation jene Linie verstanden, entlang der die beiden Seiten der aufgeschlagenen Doppelseite bzw. die von ihnen gebildeten Ebenen zusammentreffen. Bei einem Buch entspricht die Bifurkation im Wesentlichen der Buchbindungskante.

Durch diese Lösung gelingt ein schonendes Positionieren des Buches mit verbesserter Rücksichtsnahme auf den Zustand und Beschaffenheit des Buchdeckels, des Buchblocks, der Papiersorte usw. Dies gestattet eine schonende Behandlung insbesondere hinsichtlich der sich verändernden dynamischen Spannungen nach jedem Umblättervorgang und der korrelativen dynamischen Veränderung in der Buchbindung im Verbund mit dem Buchblock und dem Buchdeckel, sowie eine Berücksichtigung des Zustands und der Position des zu fotografierenden Bildes, auch wenn die zu erfassenden Oberfläche des Buches/Blatt mit einer Glasplatte oder einem Klammersystem geebnet wird.

Die Vorrichtungen aus dem Stand der Technik sehen in der Regel eine starre und nicht veränderbare Buchposition vor. Deshalb benötigt ein bekanntes Gerät eine Person, die während des Umblättervorganges laufend eingreifen muss. Eine während eines Umblättervorganges gleichbleibende Buchposition führt häufig dazu, dass dynamische Spannungen im Bereich der Bindung gestaut werden, was eine große Belastung für das Buch darstellen und zu Beschädigungen führen kann.

Die Erfindung sieht dagegen vor, dass für bestimmte Bücher optimierte Positionen und Bewegungsabläufe während des Umblättervorganges eingenommen werden können.

Wegen der oben beschriebenen Faktoren gibt es nicht "einen" Buchöffnungswinkel oder überhaupt "eine" Buchpositionierung, die gleichzeitig ein optimales Erfassen des Inhaltes ermöglicht und zugleich schonend für jedes Buch ist. Aus diesen Gründen ergibt ein Einstellen auf verschiedene Öffnungswinkel, die von 180° bis hin zu 60° reichen, sowie verschiedene Ausrichtung der Buchdeckel zueinander eine insgesamt schonende Handhabung der Bücher.

Das Erfassen der Seiten erfolgt primär durch photographische Aufnahme des Bildes der aufgeschlagenen Doppelseite und Speicherung seitens einer zugehörenden Datenverarbeitungseinrichtung; danach kann bei Bedarf eine Weiterverarbeitung durch OCR-Scan od.dgl. erfolgen.

Die Erfindung gestattet ein vollautomatisches Umblättern von Büchern und fotografische Aufnahme gleichzeitig beider jeweils aufgeschlagenen Seiten ohne Blitzanlage mit abgestimmten Licht, mit einer Doppelblattkontrolle sowie Weitergabe an ein Kunden-orientiertes EDV System. Typische Buchgrößen sind z.B. Bücher einer Größe von bis zu 310 x 230 mm, Dicke 80mm, mit Papier Grammatomen von 50 bis 100 gr., vorzugsweise mit Buchrücken, die mit Fadenheftung verleimt sind. Aber auch andere buchähnliche gebundene Werke sind möglich, z.B. Ringbücher, Hefte, bei denen seitenweise umgeblättert werden kann.

Die Erfindung ermöglicht zudem einen schnellen und reibungslosen Wechsel der Bücher und erhöht durch die unabhängig vom Scann-Vorgang vorgenommene Einstellung der Parameter die Qualität der Scänn-Ergebrusse, da unterschiedliche Parameter wie Papiersorten, Papierdicken, Bücherdicke, Vergilbung, im Vorfeld berücksichtigt werden. Die Bücher lassen sich getrennt von der Scannvorrichtung vorbereiten und für eine anschließende bzw. spätere Bearbeitung ablegen. Die Vorbereitung außerhalb der Scannvorrichtung unterscheidet die Erfindung zusätzlich von der in WO 2004/025410 A2 beschriebenen Vorgangsweise.

Die erfindungsgemäße Vorrichtung kann zusätzlich ein Mittel zum Glätten der aufgeschlagenen Seiten aufweisen, mit zumindest einer gewinkelten Glasscheibe, die gegen die Seiten positionierbar ist, wobei der Winkel der Glasscheibe dem Winkel der Auflageflächen zueinander entspricht, und wobei das Mittel zum Glätten der Seiten während Ladevorgängen sowie während des Umblätterns von dem Buch abgehoben werden kann.

Eine vorteilhafte Weiterbildung der Erfindung ist mit einer zumindest die Wiege und die Umblättervorrichtung umgebenden Kammer ausgestattet, in der ein Überdruck erzeugbar ist. Dies vermeidet Verschmutzungen und kann außerdem während der Manipulation mit dem Buch entstehenden Staub ableiten.

Außerdem ist es günstig, wenn eine Umblättervorrichtung eingesetzt wird, in der das Umblättern mechanisch durch friktionalen Kontakt eines bewegten Anhebeelements mit einer Seite eingeleitet wird, wie beispielsweise in WO 2006/026800 A1 beschrieben.

Zweckmäßiger Weise kann eine der Vorrichtung zugehörende Speichereinrichtung zum Speichern der von dem Kamerasystem aufgenommenen Bilder, vorzugsweise in digitalem Format eingerichtet sein.

Zur flexibleren Positionierung des Buches und der Buchrücken, insbesondere im Laufe des Erfassungsvorganges mit verschiedentlich umgeblätterten Seiten, ist es zusätzlich günstig, wenn die Auflageflächen unabhängig voneinander in ihrer Position in drei Richtungen einstellbar sind. Ebenso kann es von Vorteil sein, wenn die Auflageflächen zusätzlich hinsichtlich des von ihnen gebildeten Winkels einstellbar sind.

Die Erfindung wird im Folgenden anhand eines nicht-einschränkenden Ausführungsbeispiels weiter erläutert, das in der nachfolgenden Beschreibung samt zugehörenden Zeichnungen dargestellt ist.
- Fig. 1 und 2: zeigen eine Scanneinrichtung gemäß dem Ausführungsbeispiel in je einer perspektivische Ansicht von schräg vorne und schräg hinten;
- Fig. 3: zeigt die Schlittenanordnung der Scanneinrichtung der Fig. 1 und 2;
- Fig. 4: illustriert die Bewegungsrichtungen der Schlittenanordnung der Fig. 3;
- Fig. 5: ist ein Steuerungsschema für die Scanneinrichtung der Fig. 1 und 2;
- Fig. 6: zeigt die Umblättervorrichtung;
- Fig. 7 und 8: illustrieren den Umblättervorgang; und
- Fig. 9: zeigt eine schematische Übersicht über den gesamten Ablauf der Erfassung beispielsweise eines Buchbestands einer Bibliothek;
- Fig. 10: zeigt den Messtisch zum vorbereitenden Vermessen eines Buches.

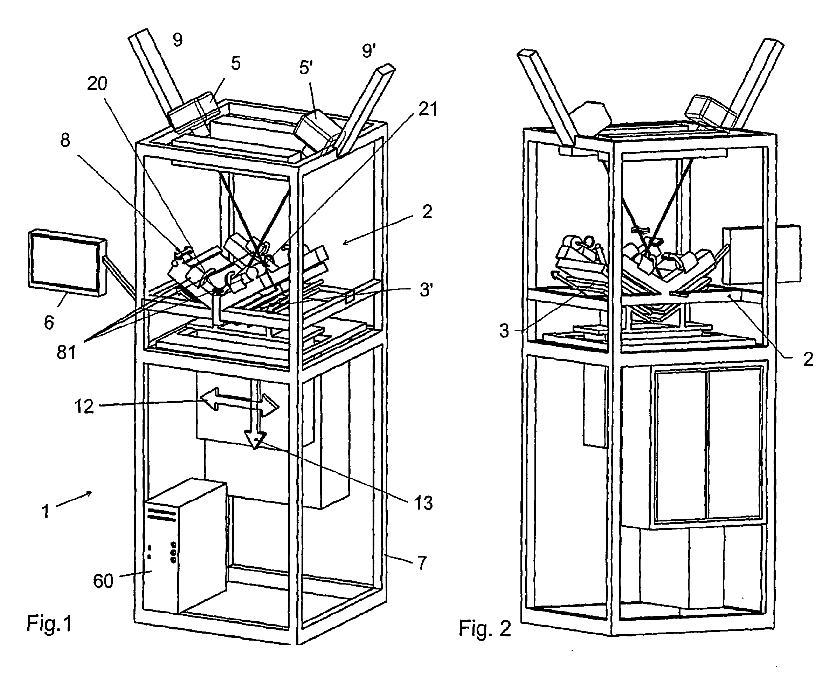

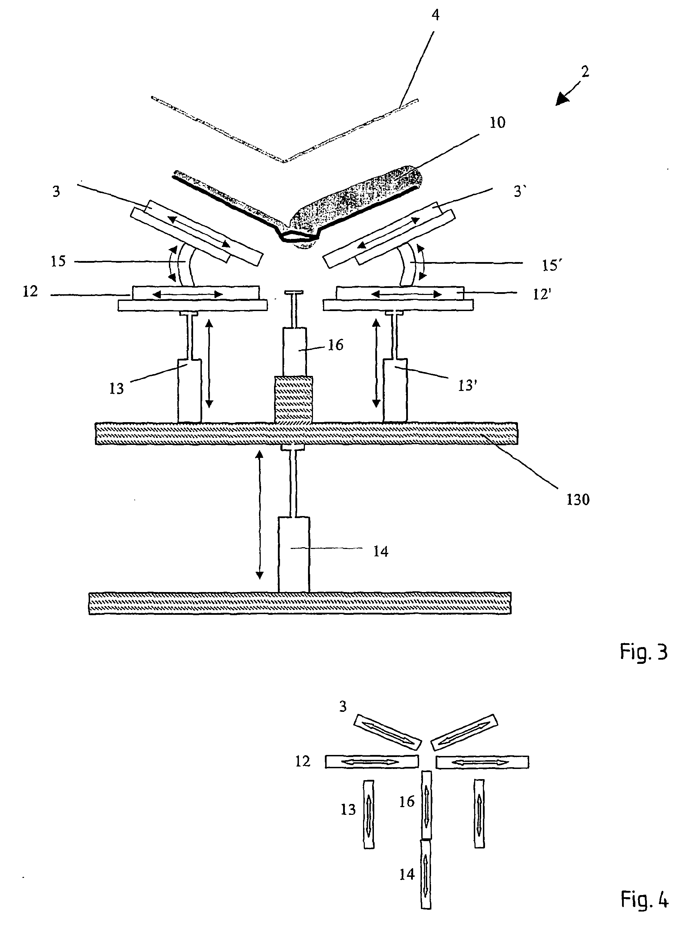

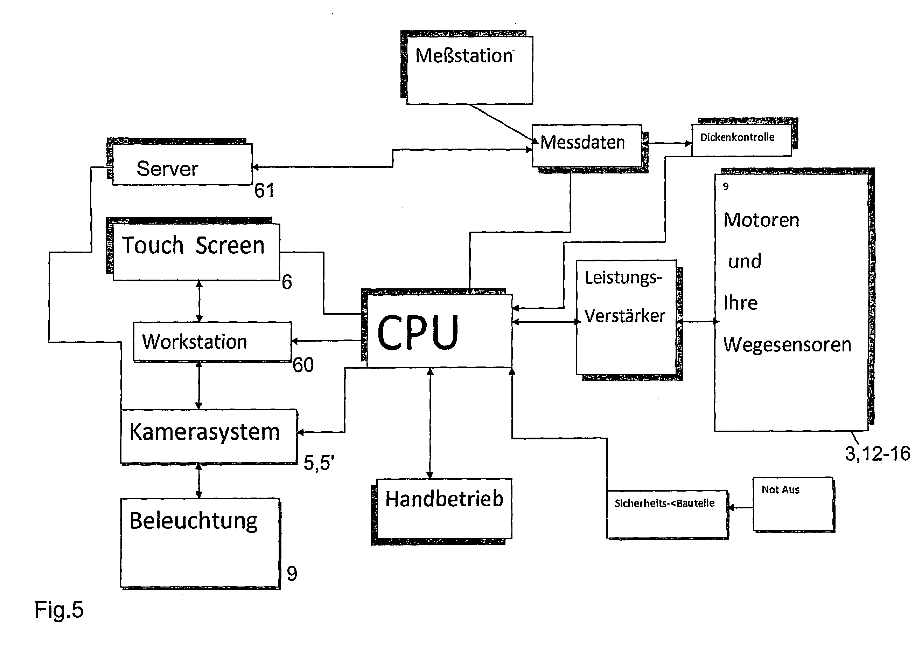

Das im Folgenden beschriebene Ausführungsbeispiel einer Scanneinrichtung gemäß der Erfindung, auch als "Digitalisier-Center-V-Lösung" bezeichnet, ist eine Vorrichtung zum gleichzeitigen Abbilden zweier Seiten eines offenen Buches. Fig. 1 zeigt eine Gesamtansicht der Scanneinrichtung von der dem Benutzer zugewandten Seite (Vorderseite). Fig. 2 zeigt eine Ansicht von der Rückseite gesehen, und Fig. 3 zeigt ein Detail, in dem die Positionierung des Buches mit der Schlittenanordnung dargestellt ist. In Fig. 5 ist ein zugehörendes Steuerungsschema dargestellt.

Bezugnehmend auf Fig. 1 bis 3 wird in der Scanneinrichtung 1 das Buch 10 mittels einer beweglichen Schlittenanordnung 2 auf einer "Buchwippe" (Wiege), die von zwei Schlitten 3, 3' gebildet wird, die jeweils eine Auflagefläche für das Buch bieten, in einer V-Position mit z.B. 120° Öffnungswinkel positioniert. Eine V-förmig angeordnete Glasplatte 4 (in Fig. 1 und 2 nicht gezeigt) mit entsprechendem Öffnungswinkel wird auf die Buchoberseite gesenkt und mittels zweier fix angeordneter Kameras 5, 5' je eine Seite fotografiert. Die so erhaltenen Daten werden in einer über einen Touchscreen 6 bedienten Workstation 60 gesammelt und können bei Bedarf zu einem Server 61 (Fig. 5) geschickt werden. Die Glasplatte 4 dient dazu, dass die zu fotografierenden Seiten (die obersten) des Buches 10 an der Glasscheibe glatt (d.h. plan) ausgerichtet und so geglättet werden. Neben den Kameras 5, 5' befinden sich Beleuchtungskörper 9, 9. Eine Kammer 7, in der ein Überdruck erzeugbar ist, umgibt die gesamte Vorrichtung einschließlich der Schlittenanordnung 2.

Die erfindungsgemäße Einrichtung verwendet ein Kassettensystem in welches ein Buch mit daran befestigten Platten eingelegt wird. Jeder Buchdeckel ist mittels Deckelklammern 81 mit der Platte verbunden und wird mit vier gefedert verschiebbaren Deckelfixierstiften eingerichtet.

Das Verfahren verwendet zwei fix angeordnete Kameras 5, 5 mit fest vorgegebenem Abstand zur Projektionsebene. Die Projektionsebene für den Scannvorgang besteht bei unproblematischen Büchern aus einer Glasplatte 4; bei empfindlichen Büchern kann stattdessen eine aus einem Edelstahlrahmen gebildete Vorrichtung verwendet werden, die an die Seiten lediglich am Seitenrand bei der Aufwärtsbewegung des Buches 10 angedrückt werden.

Dabei werden auf die Buchdeckel zwei nicht miteinander verbundene Platten mittels verchromter gefederter Schienen 81 aufgespannt, durch gefederte Bolzen auf der Platte in Position gebracht und diese dann in die Buchwippe der Einrichtung eingelegt. In einer Variante kann das Buch auch lose aufgelegt werden. In einer weiteren Variante kann zuerst der rechte Buchdeckel mit dem Schlitten verbunden sein, und nachdem die Hälfte des Buches umgeblättert worden wist, wird der linke Buchdeckel mit dem Schlitten verbunden; dadurch kann sich die jeweils andere Hälfte des Buches frei und lose an die Glasplatte anschmiegen. Der Öffnungswinkel der Buchwippe beträgt in der Phase des Umblätterns bevorzugt 120°, kann aber je nach Art und Beschaffenheit des Buches auch zwischen 100 und 135°, eventuell auch 137° (Winkel des goldenen Schnitts) sein.

Bezugnehmend auf Fig. 3 und 4 lassen sich die beiden Auflageflächen bzw. Schlitten 3, 3' in drei Ebenen verschieben: Horizontal zu- oder auseinander, vertikal und in der Ebene der Auflagefläche. Die Verschiebung in Richtung der Plattenebene ermöglicht eine genauere Umsetzung der aus der Messstation gewonnenen Daten hinsichtlich der exakten Einjustierung der Bifurkation in Bezug zur Symmetrieachse der Glasplatte. Für diese Bewegungen weist die Schlittenanordnung 2 neben den beiden erwähnten Schlitten 3, 3' außerdem je einen linken und rechten Horizontalschlitten 12, 12' sowie einen linken und rechten Höhenversatzschlitten 13, 13' auf. Zusätzlich - oder auch anstelle der beiden Höhenversatzschlitten - kann noch ein Aktuator 14 für einen Zentralhub vorgesehen sein, der z.B. die Grundplatte 130 der Höhenversatzschlitten verstellt. Die Verbindungsstücke 15, 15' zwischen den geneigten Auflageschlitten 3, 3' und den Horizontalschlitten 12,12 kann bei Bedarf hinsichtlich des Winkels verstellt werden. Außerdem kann eine verstellbare Rückenstütze 16 vorgesehen sein, die das Buch im Bereich des Rückens zusätzlich abstützt.

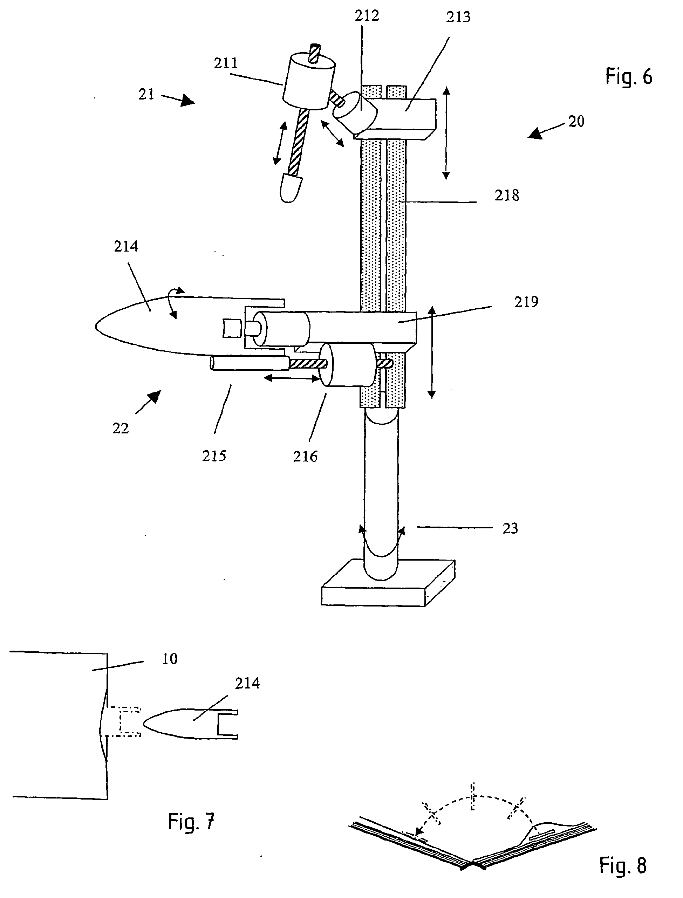

Bezugnehmend auf Fig. 6 bis 8 erfolgt der automatisierte Seitenwechsel mittels einer Umblättereinrichtung 20. Mithilfe eines Fingertriebs 21 wird das Blatt an einer Ecke hochgeschoben (angehoben), und mit einem Blätterarm 22 wird dann das Blatt von Rechts nach Links gewendet. Der beim Umblättern zwangsläufig entstehende Seiten- und Höhenversatz wird durch die in drei Ebenen verstellbare Buchwippe und Schlittenanordnung 2 korrigiert bzw. eingestellt.

Die Scanneinrichtung wölbt mit einem an sich bekannten Fingertrieb 21 die Seite auf. Feststellklötze, die das Blatt während des Scannvorgangs niederhalten, öffnen hierbei und der Blätterarm 22 kann das Blatt wenden. Mittels eines Ultraschallsystems (nicht gezeigt) erfolgt eine Doppelbogenkontrolle. Nach dem Umblättern wird die Klammer erneut geschlossen und die Glasplatte auf die Scann-Ebene der Buchoberfläche gesenkt. Ein Scannvorgang dauert etwa 3 bis 4 Sekunden womit sich etwa 30 bis 40 Seiten pro Minute bearbeiten bzw. fotografieren lassen.

Fig. 6 zeigt die Umblättereinrichtung 20. Der Fingertrieb 21 ist an sich bereits aus WO 2006/026800 A2 bekannt. Zum Unterschied von jener Druckschrift sind hier zwei Linearantriebe 211, 212 vorgesehen, wobei der erste Linearantrieb 211 den Finger vor bewegt und hierbei eine Rotation bewirkt und der zweite Linearantrieb 212 zusätzlich eine Höhenänderung des Fingers bewirkt. Die Fingerhalterung 213 ist zusätzlich entlang einer Führung 218 verstellbar. Fingertrieb 21 und Blätterarm 22 sind gemeinsam um eine Achse 23 drehbar. Der Blätterarm 22 weist ein Schwert 214 auf, das für das Blattwenden zuständig ist. Das Schwert 214 ist mittels eines Montageblocks 219 befestigt und um eine Achse 215 drehbar, sowie mittels eins Antriebs 216 linear bewegbar. Wie in Fig. 7 erkennbar, fährt das Schwert 214 in einer Linearbewegung unter das vom Fingertrieb 21 angehobene Blatt und führt dann eine Drehbewegung aus, die das Blatt wie in Fig. 8 gezeigt umwendet.

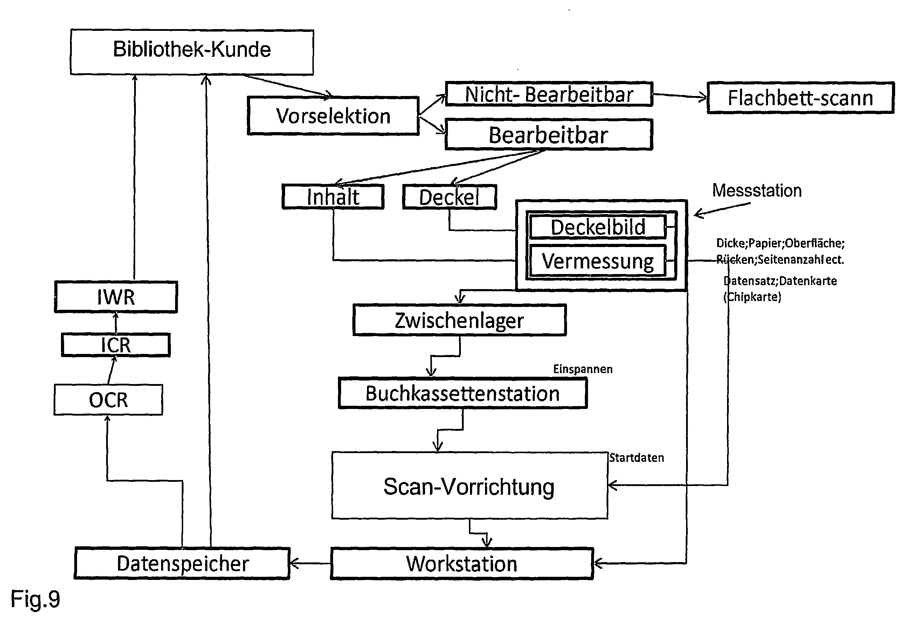

Im Folgenden wird der Vorgang der Erfassung eines oder mehrerer Bücher dargestellt. Die Erfassung eines Buchbestandes teilt sich in zwei Hauptschritte auf, nämlich eine hier als Vorselektion bezeichnete Vorbereitung des Buches einschließlich der Eingabe bibliographischer Daten, sowie das eigentliche Erfassen (Digitalisieren) der einzelnen Buchseiten bzw. Buch-Doppelseiten. Eine Übersicht über einen gesamten Erfassungsvorgangs ist in Fig. 9 gezeigt.

### Vorselektion

Bei der Vorselektion der Bücher werden für den zu erfassenden Buchbestand folgende Parameter erfasst:
1. Bücher werden gemessen. LxBxH gesamt
2. LxBxH der Seiten ohne Deckel.
3. Die Seitenanzahl und Anzahl der Scans wird ermittelt
4. Die Blattstärke wird ermittelt.
5. Die Buchbindeart (Buchrücken) wird ermittelt
6. Das Blattgewicht Gewicht wird ermittelt
7. Oberflächen Rauheit wird festgestellt
8. Vergilbung wird analysiert
9. Verfärbungen auf Grund von chemischen Prozessen werden analysiert
10. Tintenfraß wird festgestellt und analysiert
11. Druckart wird festgestellt
12. Die Flexibilität der Papiersorte wird festgestellt
13. Der pH Wert wird ermittelt
14. Die Reißfestigkeit des Blattes wird ermittelt
15. Mechanische Probleme festgestellt
Die Bücher werden nach den oben genannten Eigenschaften in Kategorien sortiert.

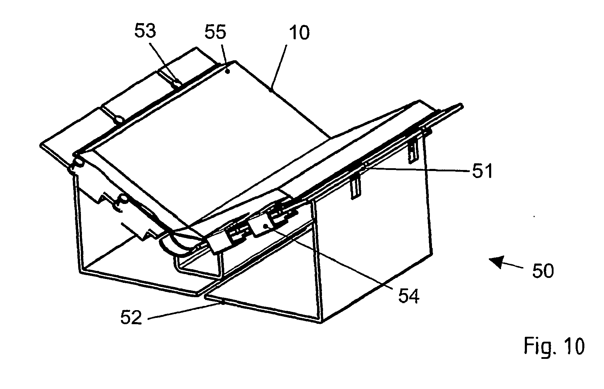

Bezugnehmend auf Fig.10 können die Buch-spezifischen Parameter wie Dicke des Buches, des Papier, Oberflächenbeschaffenheit, Rückenart, Seitenzahl des jeweiligen Buches, in einer Messstation 50 ermittelt werden, diese elektronisch mit Hilfe von Algorithmen weiter verarbeitet und auf einem Speichermedium (an der Buchkassette) abgespeichert werden. Die ermittelten Informationen gelangen mit der Buchkassette in die Scannvorrichtung. Die an der Messstation ermittelten Daten ermöglichen während des Scannvorganges eine präzise Einrichtung der Bifurkation, Steuerung der Beleuchtungseinrichtungen sowie Festlegung der Kameraeinstellungen. Die Messstation 50 weist beispielsweise eine gewinkelte Fixierplatte 51 auf, die auf einem Messtisch 52 angeordnet ist. Mittels Fixierpunkten 53 und Klammern 54 wird das Buch befestigt und die Maße bestimmt. Zusätzlich können Druckfedern 55 vorgesehen sein, die die Buchseiten festhalten.

Diese Daten werden im Computer und an einem Speichermedium an der Kassette gespeichert. Die Metadaten des Buches werden eingegeben.

Der Buch Deckel, der Buch Rücken und aus Gründen, die auf die Art der Buchbindung zurückzuführen ist, werden widerspenstige Seiten am Anfang des Buches auf einem separaten Scanner eingescannt.

### Digitalisieren

Zu Beginn des Digitalisiervorgangs werden auf dem Buch zwei nicht miteinander verbundene Platten mittels verchromter gefederter Schienen aufgespannt und diese Platten mittels gefederter Bolzen auf der Platte in Position geschoben. Das Buch wird dann samt Platten durch Bolzen positioniert in die Buchwippe eingelegt. Dann kann der seitenweise Scannvorgang beginnen:
1. Die Buchwippe fährt gesteuert durch ein Programm mittels Motor-angetriebener Schlitten. Die Positionierung erfolgt, beginnend mit der ersten Doppelseite mittels eines Seiten versatzschlitten, Höhenversatzschlitten, sowie je einem Deckelschlitten (linker und rechter Buchdeckel).
2. Blättervorgang, beispielsweise gemäß WO 2006/026800 A2: Finger schiebt Blatt hoch - Blätterarm schiebt Blatt von Rechts nach Links
3. Doppelbogenkontrolle mittels Ultraschall
4. Alle Klammern zu oder Glasplatte in Position
5. Zwei Fotoapparate Photographieren je eine Seite und schicken die Daten zum Server weiter
6. Buchwippe korrigiert den Seiten- und Höhenversatz und stellt sich entsprechend ein in die nächste (Doppel)Seitenposition

### Technische Daten (Beispiel)

### Hauptkomponenten:

1. Grundaufbau (Rahmengestell)
2. Buchwippe
3. Kamerasystem
4. Beleuchtung
5. Workstation
6. Einrichteplatz/Messstation Cassette
7. Umblätter-Komponenten
8. Steuereinheiten

Standfläche Türen geschlossen BxL 0,88 m x 0,95m
Geräte Höhe 1,8 m
Flügeltüren geöffnet 1,8m x 1m
Steuerpult LxBxH 0,4m x 0,4 m x 0,9 bis 1,6 m variabel
Gewicht ca. 220 kg je nach Ausstattung
Buch-Einlegehöhe 1,2 m Variabel
E-Anschluss 220V/16A (110V/16 A)

Seiten per/Std > 2000 je nach Ausführung und Zustand des Buches
Geschwindigkeiten frei Steuerbar über Touch-Screen Steuerpult
Standard Buchformat 320mm x 225 mm bis 150mm x 170mm
Übergrößen und Unter Formate Option

Keine Einrichtezeiten da Vorbereitung durch Buchplatten-System
mittels Mess-Buch-Wippe
Sowie RIFF-Karten Datentransfer für Book-Save und Archivierungssystem

Ausstattung Blättervorrichtung
A mit Klammerfingersystem daher keine Belastung des Druckes
B mit Glasplattensystem
C Patentierter Linear- oder Rotations-Finger
D Verstellbarer Blättertrieb
Doppelseiten-Kontrolle mittels Ultraschall

Ausstattung Kamerasystem Industriekamera
Auflösung wählbar, typischerweise entsprechend 300 dpi auf der Buchseite
Lichtsystem LED-5600k

Ausstattung Datenbank
Ausstattung EDV-System

## Patentansprüche

1. Vorrichtung zum Erfassen des Inhalts eines Buches (10) oder buchartig verbundener Blätter, aufweisend:
eine Wiege (2) mit zwei nebeneinander in einem stumpfen Winkel zueinander angeordneten Auflageflächen (3, 3'), in welche ein Buch in geöffnetem Zustand einlegbar ist, wobei das Buch mit den aufgeschlagenen Seiten nach oben liegt;
ein Kamerasystem mit zumindest zwei Kameraeinheiten (5, 5'), die jeweils oberhalb der Wiege zum Aufnehmen einer der aufgeschlagenen Seiten eines in der Wiege gehaltenen Buches positioniert sind;
eine Umblättervorrichtung (20) zum Umblättern der Seiten eines in der Wiege gehaltenen Buches;
wobei die Wiege und/oder die Auflageflächen relativ zu dem Kamerasystem in im Wesentlichen vertikaler Position bewegbar ist/sind, und
die Auflageflächen (3, 3') hinsichtlich ihrer relativen Position zueinander einstellbar sind,
**dadurch gekennzeichnet, dass**
die Auflageflächen (3, 3') hinsichtlich ihrer relativen Position zumindest in einer Richtung, die jeweils parallel zur Ebene der Auflagefläche und senkrecht zur Bifurkation ist, zueinander einstellbar sind, und jeder Auflagefläche (3, 3') ein Verbindungsstück (15, 15') zugeordnet ist, mittels dessen die jeweilige Auflagefläche hinsichtlich ihres Winkels einstellbar ist.

2. Vorrichtung nach Anspruch 1, bei welcher die Auflageflächen (3, 3') jeweils Deckelklammern (81) zum Aufspannen der Buchdeckel auf den Auflageflächen aufweisen.

3. Vorrichtung nach Anspruch 1 oder 2, bei welcher die Auflageflächen voneinander getrennt und beabstandet sind, wobei ein zwischen den Auflageflächen gebildeter Abstand den Buchrücken eines eingelegten Buches aufnehmen kann.

4. Vorrichtung nach Anspruch 3, aufweisend eine verstellbare Rückenstütze (16) zum Abstützen eines eingelegten Buches im Bereich der Rückenstütze.

5. Vorrichtung nach einem der Ansprüche 1 bis 4, aufweisend ein Mittel zum Glätten der aufgeschlagenen Seiten, aufweisend zumindest eine gewinkelte Glasscheibe, die gegen die Seiten positionierbar ist, wobei der Winkel der Glasscheibe dem Winkel der Auflageflächen zueinander entspricht, und wobei das Mittel zum Glätten der Seiten während Ladevorgängen sowie während des Umblätterns von dem Buch abhebbar ist.

6. Vorrichtung nach einem der Ansprüche 1 bis 5, aufweisend eine zumindest die Wiege und die Umblättervorrichtung umgebende Kammer, in der ein Überdruck erzeugbar ist.

7. Vorrichtung nach einem der Ansprüche 1 bis 6, aufweisend eine Umblättervorrichtung, in der das Umblättern mechanisch durch friktionalen Kontakt eines bewegten Anhebeelements mit einer Seite eingeleitet wird.

8. Vorrichtung nach einem der Ansprüche 1 bis 7, aufweisend eine zugehörende Speichereinrichtung zum Speichern der von dem Kamerasystem aufgenommenen Bilder, vorzugsweise in digitalem Format.

9. Vorrichtung nach einem der Ansprüche 1 bis 8, bei welcher die Auflageflächen unabhängig voneinander in ihrer Position in drei Richtungen einstellbar sind.

## Claims

1. Apparatus for detecting the content of a book (10) or of pages bound in a book-like manner including:
a cradle (2) with two supporting surfaces arranged at an obtuse angle to each other (3, 3), wherein a book with the opened pages can be placed, the book lying with the pages flipped opened facing upwards;
a camera system with at least two camera units (5, 5') each of them placed above the cradle, for recording one of the pages flipped open of a book placed in the cradle;
a page turning device (20) for turning the pages of a book placed in the cradle;
the cradle and/or the supporting surfaces being moveable basically in a vertical position relative to the camera system and
the supporting devices (3, 3') being adjustable to each other with regard to their relative position.
**characterised in that**
the supporting devices (3, 3') are adjustable to each other with regard to their relative position at least in a direction which is parallel to the plane of the supporting surface and perpendicular to the bifurcation and each supporting surface (3, 3') is assigned a connecting piece (15, 15'), by means of which the supporting surface is adjustable with regard to its angle.

2. Device according to claim 1, wherein the supporting devices (3, 3') present cover clamps (81) for fixing the book cover on the supporting surfaces.

3. Device according to claim 1 or 2, wherein the supporting devices are separated from one another and are spaced, whereas the space formed between the supporting surfaces can include the spine of a resting book.

4. Device according to claim 3, including an adjustable spine support (16) to support a resting book in the area of the spine support.

5. Device according to one of the claims 1 to 4, including a means for flattening the opened pages, including at least one angled glass plate positionable against the pages, wherein the angle of the glass plate corresponds to the angle of the supporting surfaces and wherein the means for flattening the pages can be lifted up from the book during the loading processes as well as during the page turning process.

6. Device according to one of the claims 1 to 5, including a chamber enclosing at least the cradle and page turning device, in which overpressure can be produced.

7. Device according to one of the claims 1 to 6, including a page turning device, in which pages are turned mechanically through the frictional contact between the moved lifting element and the page.

8. Device according to one of the claims 1 to 7, including a storage device for saving the images taken by the camera system, preferably in a digital format.

9. Device according to one of the claims 1 to 8, wherein the supporting surfaces are adjustable independently from one another in their position in three directions.

## Revendications

1. Dispositif d'enregistrement du contenu d'un livre (10) ou de feuilles reliées à la manière d'un livre, comportant :
un berceau (2) pourvu de deux surfaces d'appui (3, 3') disposées l'une à côté de l'autre à un angle obtus, dans lequel peut être disposé un livre à l'état ouvert avec les pages ouvertes orientées vers le haut ;
un système de caméra présentant au moins deux unités de caméra (5, 5'), respectivement disposées au-dessus du berceau pour enregistrer une page ouverte du livre logé dans le berceau ;
un dispositif d'avancement des pages (20) destiné à tourner les pages d'un livre logé dans le berceau ;
le berceau et/ ou les surfaces d'appui pouvant être déplacés en position essentiellement verticale par rapport au système de caméra, et
les dispositifs d'appui (3, 3') étant réglables l'un par rapport à l'autre en ce qui concerne leur position relative
**caractérisé par** ce que
les dispositifs d'appui (3, 3') sont réglables l'un par rapport à l'autre en ce qui concerne leur position relative, du moins dans une direction qui est parallèle au plan de la surface d'appui et perpendiculaire à la bifurcation et une pièce intermédiaire (15, 15') est assignée à chaque surface d'appui (3,3'), à l'aide de laquelle la surface d'appui est réglable en ce qui concerne son angle.

2. Dispositif conformément à la demande 1, où les dispositifs d'appui (3, 3') sont pourvus de pinces pour les couvertures (81) afin de fixer la couverture du livre sur les surfaces d'appui.

3. Dispositif conformément à la demande 1 ou 2, où les dispositifs d'appui sont séparés l'un de l'autre et sont espacés, vu que l'espace formé entre les surfaces d'appui peut renfermer l'épine d'un livre y reposant.

4. Dispositif conformément à la demande 3, comprenant un support d'épine réglable (16) pour soutenir un livre reposant dans la zone du support d'épine.

5. Dispositif conformément à l'une des demandes 1-4, comprenant un moyen pour aplatir les pages ouvertes, y compris au moins une plaque en verre anglée positionnable contre les pages, où l'angle de la plaque en verre correspond à l'angle des surfaces d'appui et où le moyen pour aplatir les pages peut être soulevé du livre pendant les processus de chargement ainsi que pendant le processus du tournage des pages.

6. Dispositif conformément à l'une des demandes 1-5, comprenant une chambre enfermant au moins le berceau et le dispositif qui tourne les pages, dans lequel la surpression peut se produire.

7. Dispositif conformément à l'une des demandes 1-6, comprenant un dispositif qui tourne les pages, par lequel les pages sont tournées mécaniquement à l'aide du contact frictionnel entre l'élément mobile qui tourne les pages et la page.

8. Dispositif conformément à l'une des demandes 1-7, comprenant un dispositif de stockage pour la sauvegarde des images prises par le système de caméra, de préférence en format numérique.

9. Dispositif conformément à l'une des demandes 1-8, où les surfaces d'appui sont réglables indépendamment l'une de l'autre dans leur position sur trois directions.
